# EUROPEAN PATENT APPLICATION

(11) **EP 4 661 340 A1**
(43) Date of publication of application: **10.12.2025**
(21) Application number: 24766259.6
(22) Date of filing: 21.02.2024
(51) Int. Cl.: H04L 9/40, H04W 12/069, H04L 9/32, H04W 12/06

(54) **COMMUNICATION METHOD AND COMMUNICATION APPARATUS**

(30) Priority: 06.03.2023 CN 202310245856
(71) Applicant: Huawei Technologies Co., Ltd., Shenzhen, Guangdong 518129 (CN)
(72) Inventor: LI, Fei, Shenzhen, Guangdong 518129 (CN)
(74) Representative: Isarpatent
(86) International application number: PCT/CN2024/077874
(87) International publication number: WO 2024/183537

(57) **Abstract**

This application provides a communication method and a communication apparatus. The method includes: An authentication server function receives an authentication request message of a terminal device, where the authentication request message includes a subscription concealed identifier of the terminal device. The authentication server function sends a first request message to a unified data management function based on the authentication request message, where the first request message is used to obtain a subscription permanent identifier of the terminal device, and the first request message carries a certificate of the UE or carries information in the certificate of the UE. The authentication server function receives a response message sent by the unified data management function, where the response message includes the subscription permanent identifier, and the subscription permanent identifier corresponds to the information in the certificate of the terminal device. The authentication server function determines a security anchor function key based on the subscription permanent identifier. According to the method provided in this application, the subscription permanent identifier may be determined based on the information in the certificate of the terminal device, so that security of communication between the terminal device and a network side is ensured when UE security is ensured.

## Description

This application claims priority to Chinese Patent Application No. 2023102458564, filed with the China National Intellectual Property Administration on March 6, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

To ensure security of communication between a terminal device, an access network, and a core network, authorization needs to be performed between the terminal device and the core network, to ensure that the network is not used by an unauthorized user and that a user does not access an unauthorized network.

A transport layer security (transport layer security, TLS) protocol is a widely used identity authentication and secure transport protocol. In the TLS protocol, a shared session key of two parties is obtained when identity authentication succeeds. The shared session key is used for encryption and authentication of subsequent communication content, namely, confidentiality and integrity protection. Generally, the TLS protocol is used for server authentication, and another authentication protocol like an extensible authentication protocol (extensible authentication protocol, EAP) is used for client authentication.

EAP-TLS authentication is a two-way authentication method in which the client and the server perform mutual verification on a digital certificate. The server provides a certificate for the client. After verifying the certificate of the server, the client submits a digital certificate of the client to the server. However, user identities may be disclosed during EAP-TLS authentication.

### SUMMARY

This application provides a communication method and a communication apparatus.

According to a first aspect, a communication method is provided. The method provided in the first aspect may be performed by an authentication server function, or may be performed by a chip configured in the authentication server function. This is not limited in this application.

Specifically, the method includes: An authentication server function receives an authentication request message of a terminal device, where the authentication request message includes a subscription concealed identifier of the terminal device. The authentication server function sends a first request message to a unified data management function based on the authentication request message, where the first request message is used to obtain a subscription permanent identifier of the terminal device, and the first request message carries a certificate of the terminal device or carries information in the certificate of the terminal device. The authentication server function receives a response message sent by the unified data management function, where the response message includes the subscription permanent identifier, and the subscription permanent identifier corresponds to the information in the certificate of the terminal device. The authentication server function determines a security anchor function key based on the subscription permanent identifier.

According to the communication method provided in the first aspect, to ensure that an identity of the user terminal is not disclosed, when the terminal device sends a registration request message to the authentication server function, the registration request message carries the anonymous subscription concealed identifier. In other words, the subscription concealed identifier of the terminal device includes a realm of the terminal device, but does not include a user name of the terminal device. To complete security authentication between the terminal device and the authentication server function, the authentication server function may send the first request message to the unified data management function, where the first request message carries the certificate of the terminal device or the information in the certificate, and the first request message is used to obtain the subscription permanent identifier of the terminal device. Then, the authentication server function receives the response message sent by the unified data management function, where the response message includes the subscription permanent identifier of the terminal device, and the subscription permanent identifier corresponds to the information in the certificate of the terminal device. Therefore, the authentication server function may obtain the subscription permanent identifier of the UE based on the response message. In other words, the authentication server function may know which terminal device initiates an authentication request. In this way, the security anchor function key may be determined based on the subscription permanent identifier, and finally identity authentication between the terminal device and the authentication server function is completed. According to the method provided in this application, in an EAP-TLS authentication process, when the terminal device carries the anonymous subscription concealed identifier, the subscription permanent identifier of the terminal device may be determined based on the information in the certificate of the terminal device. This ensures security of the terminal device, avoids disclosure of a user identity, and ensures security of communication between the terminal device and a network side.

It should be noted that the response message further includes subscription information of the terminal device. The authentication service may obtain the subscription information of the terminal device based on the response message, to provide a corresponding service for the terminal device.

Optionally, the subscription information may include AKMA service indication information.

It should be further noted that the information in the certificate of the terminal device may be understood as information included in the certificate of the terminal device. For example, the certificate includes a name, a serial number, a subject identifier (subject ID), a subject name (subject name), a subject alternative name (subject alternative name), or the like. Certainly, the information in the certificate of the terminal device may further include other information that can identify the terminal device. The information included in the certificate is not specifically limited in embodiments of this application.

In a possible implementation of the first aspect, before the authentication server function sends the first request message to the unified data management function based on the authentication request message, the method further includes: The authentication server function sends a second request message to the unified data management function, where the second request message carries the subscription concealed identifier. The authentication server function receives indication information sent by the unified data management function, where the indication information indicates an authentication manner of the terminal device. The authentication server function sends the authentication manner of the terminal device to the terminal device. The authentication server function receives the certificate of the terminal device sent by the terminal device, where the certificate of the terminal device carries the information in the certificate of the terminal device. In this implementation, the authentication server function sends an authentication request message to the unified data management, where the message carries the subscription concealed identifier, and then the authentication server function receives indication information sent by the unified data management function. Because the second request message carries only the anonymous subscription concealed identifier, the indication information includes only the authentication manner of the terminal device. Then, the terminal device sends the certificate of the terminal device to the authentication server function based on the authentication manner, and the authentication server function may obtain the subscription permanent identifier of the terminal device based on the certificate of the terminal device.

According to a second aspect, a communication method is provided. The method provided in the second aspect may be performed by a unified data management function, or may be performed by a chip configured in the unified data management function. This is not limited in this application.

Specifically, the method includes: The unified data management function receives a first request message sent by an authentication server function, where the first request message is used to obtain a subscription permanent identifier of a terminal device, and the first request message carries a certificate of the terminal device or information in the certificate of the terminal device. The unified data management function determines the subscription permanent identifier of the terminal device based on the information in the certificate of the terminal device. The unified data management function sends a response message to the authentication server function, where the response message includes the subscription permanent identifier.

According to the communication method provided in the second aspect, when the UE carries an anonymous SUCI to initiate authentication, to complete security authentication between the terminal device and the authentication server function, the unified data management function may determine the subscription permanent identifier of the terminal device based on the certificate of the terminal device or the information in the certificate of the terminal device that is carried in the first request message sent by the authentication server function, and then the unified data management function may send the subscription permanent identifier to the authentication server function. In this case, the authentication server function may know which terminal device initiates an authentication request, and the authentication server function may further determine a security anchor key based on the subscription permanent identifier, to finally complete identity authentication between the UE and the AUSF. According to the method provided in this application, in an EAP-TLS authentication process, when the terminal device carries the anonymous subscription concealed identifier, the unified data management function may determine the subscription permanent identifier of the terminal device based on the information in the certificate of the terminal device. This ensures security of the terminal device, avoids disclosure of a user identity, and ensures security of communication between the terminal device and a network side.

In a possible implementation of the second aspect, before the unified data management function determines the subscription permanent identifier of the terminal device based on the information in the certificate of the terminal device or the information in the certificate of the terminal device, the method further includes: The unified data management function preconfigures a correspondence between the information in the certificate of the terminal device and the subscription permanent identifier of the terminal device. In this implementation, the unified data management function may preconfigure the correspondence between the information in the certificate of the terminal device and the subscription permanent identifier of the terminal device in advance. Then, after the unified data management function receives the first request message, the subscription permanent identifier of the terminal device may be determined based on the information in the certificate of the terminal device carried in the first request message, to provide the subscription permanent identifier of the terminal device for the authentication server function.

In a possible implementation of the second aspect, the method further includes: The unified data management function determines subscription information of the terminal device based on the information in the certificate of the terminal device, where the response message further includes the subscription information of the terminal device. In this implementation, the unified data management function may determine the subscription permanent identifier of the terminal device based on the information in the certificate of the terminal device, and then determine the subscription information of the terminal device based on the subscription permanent identifier of the terminal device. After the unified data management function determines the subscription information of the terminal device, the response message sent by the unified data management function to the authentication server function includes the subscription information of the terminal device.

According to a third aspect, a communication method is provided. The method provided in the third aspect may be performed by an authentication server function, or may be performed by a chip configured in the authentication server function. This is not limited in this application.

Specifically, the method includes: The authentication server function receives an authentication request message of a terminal device, where the authentication request message includes a subscription concealed identifier of the terminal device. The authentication server function receives a certificate of the terminal device sent by the terminal device, where the certificate of the terminal device carries information in the certificate of the terminal device. The authentication server function determines a subscription permanent identifier of the terminal device based on the information in the certificate of the terminal device. The authentication server function determines a security anchor function key based on the subscription permanent identifier.

According to the communication method provided in the third aspect, to ensure that an identity of the user terminal is not disclosed, when the terminal device sends a registration request message to the authentication server function, the registration request message carries the anonymous subscription concealed identifier. In other words, the subscription concealed identifier includes a realm of the terminal device, but does not include a user name of the terminal device. To complete security authentication between the terminal device and the authentication server function, after receiving the authentication request of the terminal device, the authentication server function determines the subscription permanent identifier of the terminal device based on the information in the certificate carried by the terminal device. In other words, the authentication server function may directly know, based on the information in the certificate carried by the terminal device, which terminal device initiates the authentication request. Therefore, the security anchor function key may be determined based on the subscription permanent identifier, and identity authentication between the terminal device and the authentication server function is finally completed.

In a possible implementation of the third aspect, the method further includes: The authentication server function sends a subscription request message to a unified data management function, where the subscription request message carries the subscription permanent identifier. The authentication server function receives a subscription response message sent by the unified data management function, where the subscription response message carries subscription information of the terminal device. The authentication server function provides a subscription service of the terminal device based on the subscription information of the terminal device. In this implementation, because the authentication server function may directly use the information in the terminal device as the subscription permanent identifier of the terminal device, the unified data management function cannot send the subscription information of the terminal device to the authentication server function without knowing the subscription permanent identifier of the terminal device. In this case, the authentication server function cannot provide a subscription service for the terminal device. Therefore, the authentication server function sends the subscription request message carrying the subscription permanent identifier to the unified data management. The unified data management determines the subscription information of the terminal device based on the subscription permanent identifier, and sends the subscription information to the authentication server function through the subscription response message. Finally, the authentication server function may provide the subscription service for the terminal device based on the subscription information.

For example, the subscription information may include AKMA service indication information. Certainly, the subscription information may alternatively be other information. This is not limited in embodiments of this application.

It should be understood that when the subscription information is the AKMA service indication information, the authentication server function provides an AKMA service for the terminal device.

In a possible implementation of the third aspect, that the authentication server function determines the subscription permanent identifier of the terminal device based on the information in the certificate of the terminal device includes: The authentication server function determines the subscription permanent identifier of the terminal device based on the information in the certificate of the terminal device and information in a public land mobile network of the terminal device.

According to a fourth aspect, a communication method is provided. The method provided in the fourth aspect may be performed by a terminal device, or may be performed by a chip disposed in the terminal device. This is not limited in this application.

Specifically, the method includes: The terminal device sends a registration request message to an access and mobility management function, where the registration request message includes a subscription concealed identifier of the terminal device. The terminal device receives an authentication success message sent by an authentication server function. The terminal device determines a subscription permanent identifier of the terminal device based on information in a certificate of the terminal device. The terminal device calculates a security function key based on the subscription permanent identifier.

According to the communication method provided in the fourth aspect, to ensure that an identity of the user terminal is not disclosed, the registration request message sent by the terminal device to the authentication server function carries the anonymous subscription concealed identifier. In other words, the subscription concealed identifier includes a realm of the terminal device, but does not include a user name of the terminal device. After the terminal device receives the authentication success message sent by the authentication server function, the terminal device may determine the subscription permanent identifier of the terminal device based on the information in the certificate of the terminal device, and finally, the terminal device may determine the security anchor function key based on the subscription permanent identifier, to avoid disclosure of a user identity, and ensure security of communication between the terminal device and a network side.

In some embodiments, that the terminal device determines the subscription permanent identifier of the terminal device based on the information in the certificate of the terminal device includes: The terminal device determines the subscription permanent identifier based on the information in the certificate of the terminal device and a public land mobile network identifier of the terminal device.

In a possible implementation of the fourth aspect, before the terminal device receives the authentication success message sent by the authentication server function, the method further includes: The terminal device receives indication information sent by the authentication server function, where the indication information indicates an authentication manner of the terminal device. The terminal device sends the certificate of the terminal device to the authentication server function, where the certificate of the terminal device carries the information in the certificate of the terminal device.

According to a fifth aspect, a communication method is provided. The method provided in the fifth aspect may be performed by a unified data management function, or may be performed by a chip configured in the unified data management function. This is not limited in this application.

Specifically, the method includes: The unified data management function receives a subscription request message sent by an authentication server function, where the subscription request message carries a subscription permanent identifier of a terminal device, and the subscription permanent identifier corresponds to information in a certificate of the terminal device. The unified data management function determines subscription information of the terminal device based on the subscription permanent identifier. The unified data management function sends a subscription response message to the authentication server function, where the subscription response message includes the subscription information of the terminal device.

According to the communication method provided in the fifth aspect, the unified data management function cannot send the subscription information of the terminal device to the authentication server function when the unified data management function does not know the subscription permanent identifier of the terminal device. In this case, the unified data management function may receive the subscription request message sent by the authentication server function, the unified data management determines the subscription information of the terminal device based on the subscription permanent identifier carried in the subscription request message, and sends the subscription information to the authentication server function through the subscription response message. Finally, the authentication server function may provide a subscription service for the terminal device based on the subscription information.

For example, the subscription information may include AKMA service indication information. Certainly, the subscription information may alternatively be other information. This is not limited in embodiments of this application.

It should be understood that when the subscription information is the AKMA service indication information, the authentication server function provides an AKMA service for the terminal device.

According to a sixth aspect, a communication system is provided. The system includes an authentication server function and a unified data management function. The authentication server function is configured to perform the method according to any one of the first aspect or the possible implementations of the first aspect, and the unified data management function is configured to perform the method according to any one of the second aspect or the possible implementations of the second aspect.

According to a seventh aspect, a communication system is provided. The system includes a terminal device, an authentication server function, and a unified data management function. The terminal device is configured to perform the method according to any one of the third aspect or the possible implementations of the third aspect, the authentication server function is configured to perform the method according to any one of the fourth aspect or the possible implementations of the fourth aspect, and the unified data management function is configured to perform the method according to the fifth aspect.

According to an eighth aspect, a communication apparatus is provided. The communication apparatus includes units configured to perform the steps in any one of the first aspect or the possible implementations of the first aspect, or units configured to perform the steps in any one of the second aspect or the possible implementations of the second aspect, units configured to perform the steps in any one of the third aspect or the possible implementations of the third aspect, units configured to perform the steps in any one of the fourth aspect or the possible implementations of the fourth aspect, or units configured to perform the steps in the fifth aspect.

According to a ninth aspect, a communication apparatus is provided. The communication apparatus includes at least one processor and a memory. The processor is coupled to the memory, and the memory stores program instructions. When the program instructions stored in the memory are executed by the processor, the method according to any one of the first aspect or the possible implementations of the first aspect, or the method according to any one of the second aspect or the possible implementations of the second aspect, or the method according to any one of the third aspect or the possible implementations of the third aspect, or the method according to any one of the fourth aspect or the possible implementations of the fourth aspect, or the method according to the fifth aspect is performed.

According to a tenth aspect, a communication apparatus is provided. The communication apparatus includes at least one processor and an interface circuit. The at least one processor is configured to perform the method according to any one of the first aspect or the possible implementations of the first aspect, or the method according to any one of the second aspect or the possible implementations of the second aspect, or the method according to any one of the third aspect or the possible implementations of the third aspect, or the method according to any one of the fourth aspect or the possible implementations of the fourth aspect, or the method according to the fifth aspect.

According to an eleventh aspect, a computer program product is provided. The computer program product includes a computer program. When being executed by a processor, the computer program is configured to perform the method according to any one of the first aspect or the possible implementations of the first aspect, or the method according to any one of the second aspect or the possible implementations of the second aspect, or the method according to any one of the third aspect or the possible implementations of the third aspect, or the method according to any one of the fourth aspect or the possible implementations of the fourth aspect, or the method according to the fifth aspect.

According to a twelfth aspect, an authentication server function is provided. The authentication server function includes the communication apparatus provided in the eighth aspect, or the authentication server function includes the communication apparatus provided in the ninth aspect, or the authentication server function includes the communication apparatus provided in the tenth aspect.

According to a thirteenth aspect, a unified data management function is provided. The unified data management function includes the communication apparatus provided in the eighth aspect, or the unified data management function includes the communication apparatus provided in the ninth aspect, or the authentication server function includes the communication apparatus provided in the tenth aspect.

According to a fourteenth aspect, a terminal device is provided. The terminal device includes the communication apparatus provided in the eighth aspect, or the terminal device includes the communication apparatus provided in the ninth aspect, or the terminal device includes the communication apparatus provided in the tenth aspect.

According to a fifteenth aspect, a computer-readable storage medium is provided. The computer-readable storage medium stores a computer program. When being executed, the computer program is configured to perform the method according to any one of the first aspect or the possible implementations of the first aspect, or the method according to any one of the second aspect or the possible implementations of the second aspect, or the method according to any one of the third aspect or the possible implementations of the third aspect, or the method according to any one of the fourth aspect or the possible implementations of the fourth aspect, or the method according to the fifth aspect.

According to a sixteenth aspect, a chip is provided. The chip includes a processor, configured to invoke a computer program from a memory and run the computer program, so that a communication device in which the chip is installed performs the method according to any one of the first aspect or the possible implementations of the first aspect, or the method according to any one of the second aspect or the possible implementations of the second aspect, or the method according to any one of the third aspect or the possible implementations of the third aspect, or the method according to any one of the fourth aspect or the possible implementations of the fourth aspect, or the method according to the fifth aspect.

### BRIEF DESCRIPTION OF DRAWINGS

FIG. 1 is a diagram of a network architecture applicable to a communication method according to an embodiment of this application;
FIG. 2A to FIG. 2C show an EAP-TLS flowchart defined in the standard protocol 33.501;
FIG. 3A and FIG. 3B are an interaction diagram of a communication method according to an embodiment of this application;
FIG. 4A and FIG. 4B are an interaction diagram of another communication method according to an embodiment of this application;
FIG. 5 is a block diagram of a communication apparatus 500 according to an embodiment of this application;
FIG. 6 is a block diagram of another communication apparatus 600 according to an embodiment of this application;
FIG. 7 is a block diagram of a communication apparatus 700 according to an embodiment of this application;
FIG. 8 is a block diagram of another communication apparatus 800 according to an embodiment of this application;
FIG. 9 is a block diagram of a communication apparatus 900 according to an embodiment of this application;
FIG. 10 is a block diagram of another communication apparatus 1000 according to an embodiment of this application; and
FIG. 11 is a diagram of a structure of a terminal device 1100 according to this application.

### DESCRIPTION OF EMBODIMENTS

The following clearly and completely describes the technical solutions in embodiments of this application with reference to the accompanying drawings in embodiments of this application.

Terms used in the following embodiments are merely intended to describe specific embodiments, but are not intended to limit this application. The terms "one", "a", and "this" of singular forms used in this specification and the appended claims of this application are also intended to include expressions such as "one or more", unless otherwise specified in the context clearly. It should be further understood that, in embodiments of this application, "one or more" refers to one or more than two (including two); and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and variants of the terms all mean "include but are not limited to", unless otherwise specifically emphasized in another manner.

"A plurality of" in embodiments of this application means two or more. It should be noted that in the descriptions of embodiments of this application, the terms such as "first" and "second" are merely intended for distinction in description, but should not be construed as indicating or implying relative importance or indicating or implying a sequence.

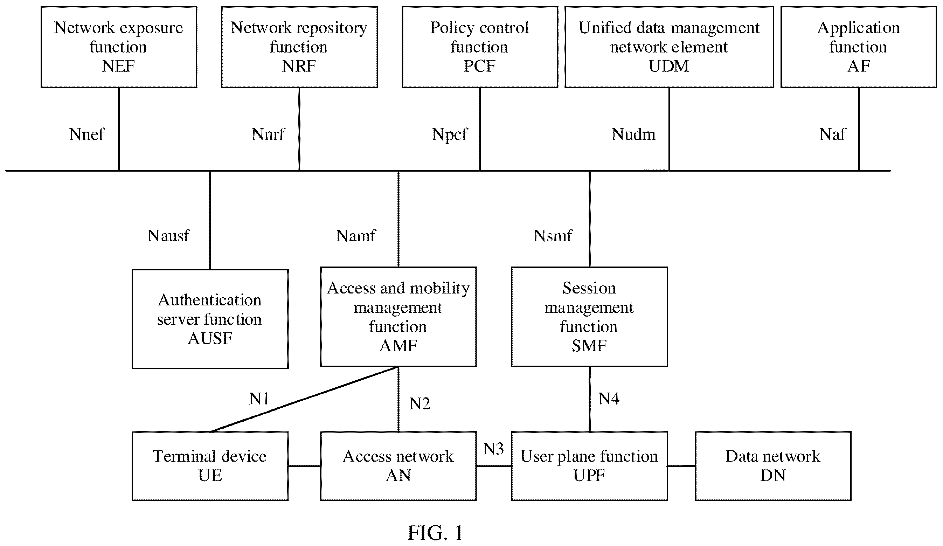

FIG. 1 is a diagram of a network architecture applicable to a communication method according to an embodiment of this application. As shown in FIG. 1, the network architecture in this embodiment of this application may include the following:
1. User equipment (user equipment, UE): The user equipment may be referred to as a terminal device, a terminal, an access terminal, a handheld terminal, a notebook computer, a subscriber unit (subscriber unit), a subscriber station, a mobile station, a remote station, a remote terminal, a mobile device, a user terminal, or a wireless communication device, a user agent, or a user device. The UE may alternatively be a cellular phone (cellular phone), a smartphone (smartphone), a wireless data card, a tablet computer, a wireless modem (modem), a handheld (handheld) device, a laptop computer (laptop computer), a cordless phone (cordless phone), a session initiation protocol (session initiation protocol, SIP) phone, a wireless local loop (wireless local loop, WLL) station, a personal digital assistant (personal digital assistant, PDA), a machine type communication (machine type communication, MTC) terminal, a handheld device having a wireless communication function, a computing device, another processing device connected to a wireless modem, a vehicle-mounted device, a wearable device, a terminal device in a 5G network, a terminal device in a future communication system, or the like. The UE may alternatively be a terminal device like a logical entity, an intelligent device, a mobile phone, or an intelligent terminal; a communication device like a server, a gateway, a base station, or a controller; or an internet of things (Internet of things, IoT) device like a sensor, an electricity meter, or a water meter. The UE may alternatively be a wired device like a computer or a notebook computer, or another device that can access a network. This is not limited in this embodiment of this application. In embodiments of this application, an example in which the UE is a terminal device is used below for description.
2. Access network (access network, AN) device: To access a carrier network, a terminal device first passes through the access network device, and then may be connected to a service node of the carrier network through the access network device.
3. Access and mobility management function (access and mobility management function, AMF) entity: The access and mobility management function entity is a control plane network function provided by a carrier network, and is used to access control and mobility management for a terminal device to access the carrier network, for example, including functions such as mobility status management, allocation of a temporary user identity, and user authentication and granting.
4. Security anchor function (security anchor function, SEAF): The SEAF is connected to an AMF and serves as a node of a security authentication function. During specific implementation, in terms of physical location, the AMF and the SEAF may be integrated, or the AMF and the SEAF may be separately and independently disposed. In addition, in a possible implementation, functions of the AMF and the SEAF may be separately deployed, or functions of the AMF and the SEAF may be disposed in a centralized manner (for example, the AMF has a function of the SEAF).
5. Authentication server function (authentication server function, AUSF) entity: The authentication server function is used for authorization and authentication. After receiving an authorization initiation request sent by an AMF in a serving network, the AUSF in a home network sends an authorization request message to UDM in the home network, to apply for obtaining an authorization vector.
6. Unified data management (unified data management, UDM) entity: The unified data management entity may also be referred to as a UDM network function or a UDM network function entity. The unified data management entity is a control plane function provided by a carrier, and is used to store information such as a subscription permanent identifier (subscriber permanent identifier, SUPI), a credential (credential), a security context (security context), and subscription data of a subscriber in a carrier network. The SUPI is first ciphered during transmission, and a ciphered SUPI is referred to as a subscription concealed identifier (subscription concealed identifier, SUCI). The information stored in the UDM entity may be used for authentication and granting when a terminal device accesses the carrier network. The subscriber in the carrier network may be specifically a user using a service provided by the carrier network, for example, a user using a SIM card of China Telecom, or a user using a SIM card of China Mobile. The subscription permanent identifier SUPI of the subscriber may be a number of the SIM card or the like. The credential and the security context of the subscriber may be stored small files such as an encryption key of the SIM card or information related to encryption of the SIM card, and are used for authentication and/or granting. The security context may be data (cookie), a token (token), or the like stored in a local terminal (for example, a mobile phone) of the subscriber. The subscription data of the subscriber may be a supporting service of the SIM card, for example, a traffic package of the SIM card or a network that the subscriber is allowed to access.

Optionally, as shown in FIG. 1, the network architecture in this embodiment of this application may further include one or more of a network exposure function (network exposure function, NEF) entity, a network repository function (network repository function, NRF) entity, a policy control function (policy control function, PCF) entity, an application function (application function, AF) entity, a session management function (session management function, SMF) entity, or a user plane function (user plane function, UPF) entity. For other functions that are not described in FIG. 1, refer to functions defined in the 3GPP standard protocol. Details are not described herein.

The foregoing names are merely used to distinguish between different functions, and do not indicate that these entities are independent physical devices. Specific forms of the foregoing entities are not limited in this application. For example, the entities may be integrated into a same physical device, or may be different physical devices. In addition, the foregoing names are only used to distinguish between different functions, and should not constitute any limitation on this application. This application does not exclude a possibility of using other names in another future network. For example, in a 6G network, some or all of the entities may still use terms in 5G, or may use other names. Unified descriptions are provided herein. Details are not described below.

In the network architecture, an N1 interface is a reference point between a terminal device and the AMF entity; an N2 interface is a reference point between the AN entity and the AMF entity, and is configured to send a non-access stratum (non-access stratum, NAS) message and the like; an N3 interface is a reference point between the (R)AN entity and the UPF entity, and is configured to transmit user plane data and the like; and an N4 interface is a reference point between the SMF entity and the UPF entity, and is configured to transmit information such as tunnel identification information of an N3 connection, data buffering indication information, and a downlink data notification message. The names of the interfaces between the entities in FIG. 1 are merely examples, and the interfaces may have other names during specific implementation. This is not specifically limited in this application.

It should be understood that the foregoing network architecture applied to this embodiment of this application is merely an example of a network architecture described from the perspective of a service architecture, and a network architecture applicable to embodiments of this application is not limited thereto. Any network architecture that can implement functions of the foregoing entities is applicable to embodiments of this application.

When a terminal device accesses a network, to ensure security of communication between the terminal device, an access network, and a core network, authorization needs to be performed between the terminal device and the core network, to ensure that a resource in the network is not used by an unauthorized user, and prevent the terminal device from accessing an unauthorized network.

It should be noted that a TLS protocol is a widely used identity authentication and secure transmission protocol. In the TLS protocol, a shared session key of two parties is obtained when identity authentication succeeds. The shared session key is used for encryption and authentication of subsequent communication content, namely, confidentiality and integrity protection. The TLS protocol is usually combined with another authentication protocol for authentication. As an outer tunnel of these authentication protocols, the TLS protocol is used to complete server authentication, and another authentication protocol, for example, an extensible authentication protocol (extensible authentication protocol, EAP), a protected EAP protocol (protected EAP, PEAP), a challenge handshake authentication protocol (challenge handshake authentication protocol, CHAP), an authentication and key agreement (authentication and key agreement, AKA) protocol, and the like, is used to complete client authentication.

In consideration of security, an access authentication manner with a high security level is usually recommended, for example, the institute of electrical and electronics engineers (institute of electrical and electronics engineers, IEEE for short) 802.1X and extensible authentication protocol-transport layer security (extensible authentication protocol-transport layer security, EAP-TLS for short) certificate authentication, for controlling access of a mobile terminal to an enterprise wireless network.

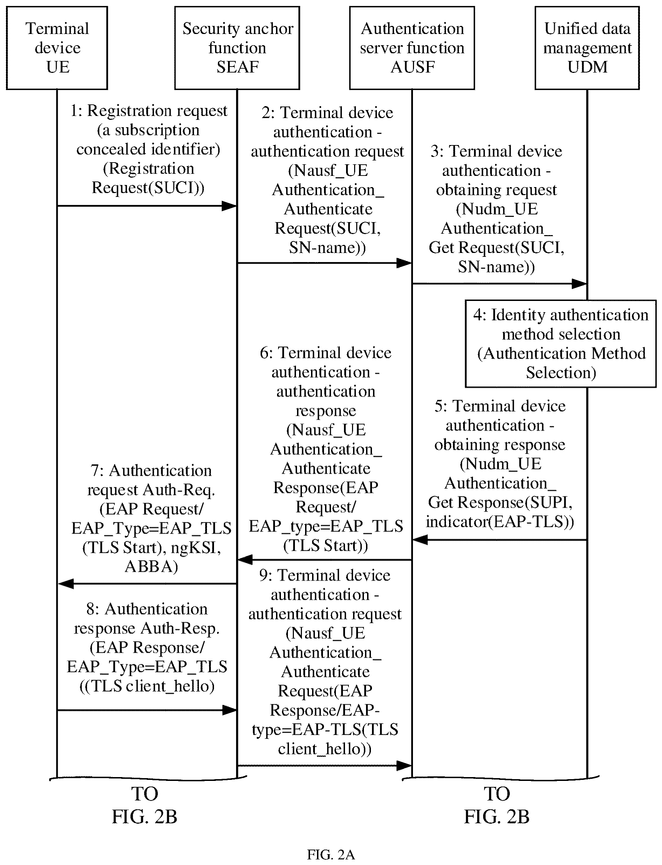

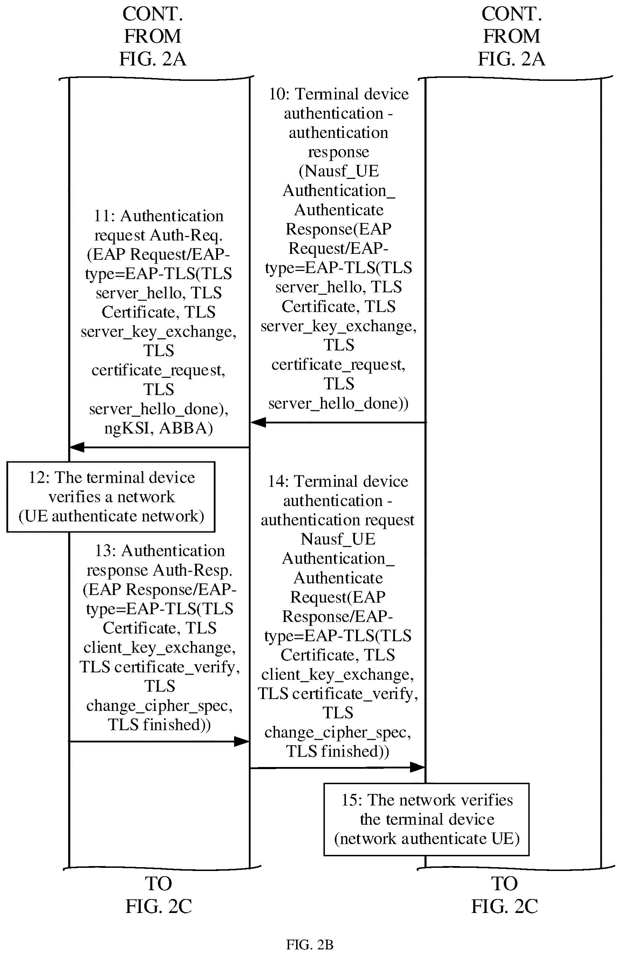

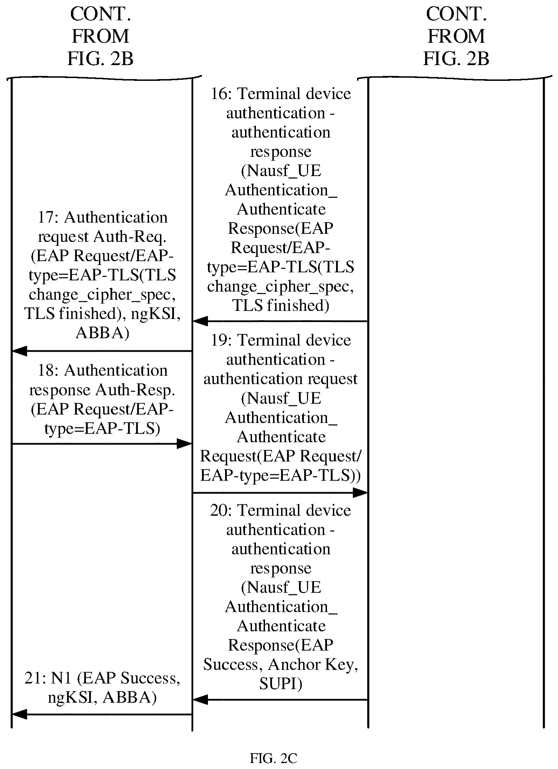

The following specifically describes an EAP-TLS authentication procedure with reference to FIG. 2A to FIG. 2C. FIG. 2A to FIG. 2C show an EAP-TLS flowchart defined in the standard protocol 33.501.

As shown in FIG. 2A to FIG. 2C, in step 1, UE sends a registration request (registration request) message to an SEAF. To ensure security of the UE, the registration request message carries a subscription concealed identifier (subscription concealed identifier, SUCI).

In step 2, the SEAF starts an authentication process after receiving the registration request message from the UE. The SEAF sends a UE authentication request (nausf_UE authentication_authenticate request) message to an AUSF, where the message includes a serving network name (serving network name, SNN) and the SUCI.

In step 3, after the AUSF receives the authentication request message sent by the SEAF, the AUSF sends a UE authentication request message (nudm_UE authentication_get request) to UDM, where the message includes the SUCI and the SNN.

In step 4, after receiving the authentication request message, the UDM performs to-be-used identity authentication method selection (authentication method selection) based on the SUCI and the SNN, and determines a subscription permanent identifier (subscription permanent identifier, SUPI) of a terminal device based on the SUCI.

In step 5, the UDM sends a UE authentication response (nudm_UE authentication_get response) message to the AUSF, where the message includes the SUPI and indication information for performing identity authentication according to an EAP-TLS method.

In step 6, the AUSF sends an EAP Request/EAP_type=EAP_TLS(TLS start) message to the SEAF in a UE authentication response (nausf-UE authentication_authenticate response) message, to indicate start of the EAP-TLS authentication process.

In step 7, the SEAF forwards the EAP Request/EAP_type=EAP _TLS(TLS Start) message to the UE in an authentication request message (auth-req.). The message includes an ngKSI and an ABBA parameter. The ABBA (anti-bidding down between architectures) provides protection for applying a security feature of a later version in an earlier version system, and indicates that the security feature is enabled in a current network. The UE and an AMF will use the ngKSI to identify a partial local security context created upon successful verification.

In step 8, the UE sends a EAP-Response/ EAP _type=EAP_TLS(TLS client_hello) message to the SEAF in an authentication response message (auth-resp.).

In step 9, the SEAF forwards the EAP-Response/EAP_type=EAP_TLS(TLS client_hello) message to the AUSF in a UE authentication request message (nausf_UE authentication_authenticate request) message.

In step 10, after receiving the EAP-Response/EAP_type=EAP_TLS(TLS client_hello) message, the AUSF determines that TLS authentication has been established. A UE authentication response (nausf_UE authentication_ authenticate response) message encapsulating an EAP Response/EAP_type= EAP-TLS message including a plurality of TLS records is sent to the UE, where the TLS record includes TLS Certificate, TLS certificate_request, TLS server_hello, TLS server_key_exchange, and TLS server_hello_done. TLS Certificate is a digital certificate of the AUSF, TLS certificate_request is a client digital certificate request, TLS server_key_exchange is a fixed-length random string encrypted by using a public key of an authentication server, and TLS server_hello_done is used to determine an algorithm required for this communication.

In step 11, the SEAF sends an authentication request message (auth-req.) to the UE, where the message carries TLS server_hello, TLS server_key_exchange, TLS Certificate, TLS certificate_request and TLS server_hello_done.

In step 12, after receiving the authentication request message sent by the SEAF, the UE checks whether the digital certificate of the AUSF is valid.

In step 13, if the digital certificate of the AUSF is valid, the UE sends an authentication response (auth-resp.) message to the AUSF, where the message carries TLS Certificate, TLS client_key_exchange, TLS certificate_verify, TLS change_cipher_spec, and TLS finished messages. TLS Certificate is a digital certificate of the UE, TLS client_key_exchange is a fixed-length random string encrypted by using a public key of the authentication server, and TLS change_cipher_spec is an encryption type that can be supported by the applicant.

In step 14, the SEAF sends TLS Certificate, TLS client_key_exchange, TLS certificate_verify, TLS change_cipher_spec, and TLS finished messages to the AUSF through a UE authentication request message (nausf_UE authentication_authenticate request) message.

In step 15, after receiving the authentication request message sent by the SEAF, the AUSF checks whether the digital certificate of the UE is valid.

In step 16, if the certificate of the UE is valid, the AUSF returns TLS change_cipher_spec and TLS finished messages to the UE through a UE authentication response (nausf_UE authentication_ authenticate response) message. TLS change_cipher_spec includes an encryption type specified by the authentication server.

In step 17, the SEAF forwards TLS change_cipher_spec and TLS finished messages to the UE through an authentication request message (auth-req.).

In step 18, after receiving the TLS finished message, the UE sends EAP Request/EAP-type=EAP-TLS to the AUSF through an authentication response message (auth-resp.).

In step 19, the SEAF sends EAP Request/EAP-type=EAP-TLS to the AUSF through a UE authentication request message (nausf_UE authentication_authenticate request) message.

In step 20, the AUSF derives a KSEAF. After authentication between the AUSF and the UE succeeds, the AUSF sends an EAP Success message to the SEAF through a UE authentication response (nausf_UE authentication_authenticate response) message, where the nausf_UE authentication_authenticate response message further includes the KSEAF, and because the AUSF receives the SUCI from the SEAF when the AUSF is started, the AUSF further includes the SUPI in the response message.

In step 21, the SEAF sends an EAP Success message to the UE through an N1 message. The message also includes the ngKSI and the ABBA parameter. After receiving the EAP Success message, the UE calculates the KSEAF. The KSEAF is used to ensure security of communication between the UE and the AUSF. The EAP-TLS authentication procedure is complete.

It should be understood that, in a 5G network, to protect an SUPI of UE from being invisible on an air interface, an SUCI is introduced to protect the SUPI of the UE. When the UE initiates a 5G network registration process, the UE encrypts the SUPI to obtain the SUCI, and sends the SUCI to an SEAF on a core network side. The SEAF sends an authentication request to an AUSF based on the SUCI, to request identity authentication on the UE. The AUSF requests, from UDM, an authorization vector used to perform identity authentication on the UE. The UDM decrypts the SUCI to obtain the SUPI, generates the authentication vector used to perform identity authentication on the UE, and feeds back the authentication vector and the SUPI to the AUSF, so that the AUSF performs identity authentication on the UE based on the authentication vector, and after authentication on the UE succeeds, returns the SUPI of the UE to the SEAF. Then, the SUPI is used as a subscriber identifier for interaction between 5G core networks during session management and mobility management of the user.

Still refer to FIG. 2A to FIG. 2C. In step 1 in the flowchart, the SUCI carried by the UE includes a user name (username) part and a realm (realm). Then, in step 5, the UDM may determine the SUPI of the UE based on the SUCI of the UE. Then, UE-related subscription data is queried based on the SUPI of the UE. In addition, the AUSF may alternatively calculate a key based on the SUPI, to finally complete authentication between the UE and the core network. However, EAP-TLS has a disadvantage that a user name transmitted through TLS is in plaintext. That is, the plaintext user name of EAP-Identity can be viewed in a captured packet. Therefore, a user identity may be disclosed during EAP-TLS authentication.

Therefore, in a related technology, to ensure that an identity of UE is not disclosed, when the UE sends a registration request message to an SEAF, an anonymous SUCI may be carried. In other words, the SUCI does not include a user name (username) part of a user, and carries only a realm (realm) part of the user. The SUCI carries only a realm but not a user name. Therefore, the SUCI is used only for addressing an AUSF/UDM. In this case, in step 5 in FIG. 2A to FIG. 2C, the UDM cannot determine which UE initiates the authentication request, and therefore cannot obtain a real identifier of the user. In other words, the UDM cannot directly determine the SUPI of the UE by using the SUCI. Finally, the UDM can return only an authentication manner of the UE to the AUSF, but cannot return the SUPI of the UE. In this case, the AUSF cannot derive a key related to the user identifier for subsequent communication protection. In addition, because the UDM cannot determine the SUPI of the UE, the UDM cannot search for subscription data related to the UE based on the SUPI of the UE, and the AUSF cannot provide a related specific service for the user.

It can be learned that how to complete identity authentication between a terminal device and a network side when ensuring security of UE and ensure security of the terminal device and the network side is a problem that needs to be concerned about in network security in the 5G era.

In view of this, this application provides a communication method. When an AUSF receives an authentication request message of a terminal device, the AUSF sends a first request message to UDM, where the registration request message includes an SUCI of UE, the first request message is used to obtain an SUPI of the UE, and the first request message carries a certificate of the UE or information in the certificate of the UE. Then, the UDM determines the SUPI of the UE based on the information in the certificate of the UE in the first request message, and sends the SUPI of the UE to the AUSF through a response message. The AUSF may determine a security anchor function key based on the SUPI, to finally complete identity authentication between the UE and the AUSF. According to the method provided in this application, in an EAP-TLS authentication process, the UDM may determine a subscription permanent identifier of the terminal device based on the information in the certificate of the terminal device, so that the AUSF can know which terminal device initiates an authentication request, and then determine, based on the subscription permanent identifier, the security anchor function key to complete identity authentication with the terminal device. In other words, security of communication between the terminal device and a network side is ensured on the basis of ensuring security of the terminal device.

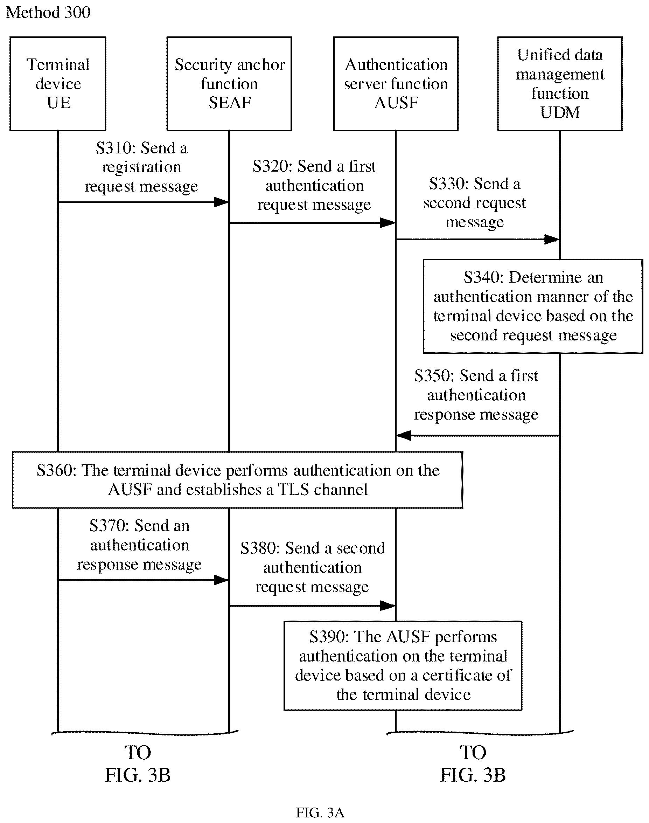

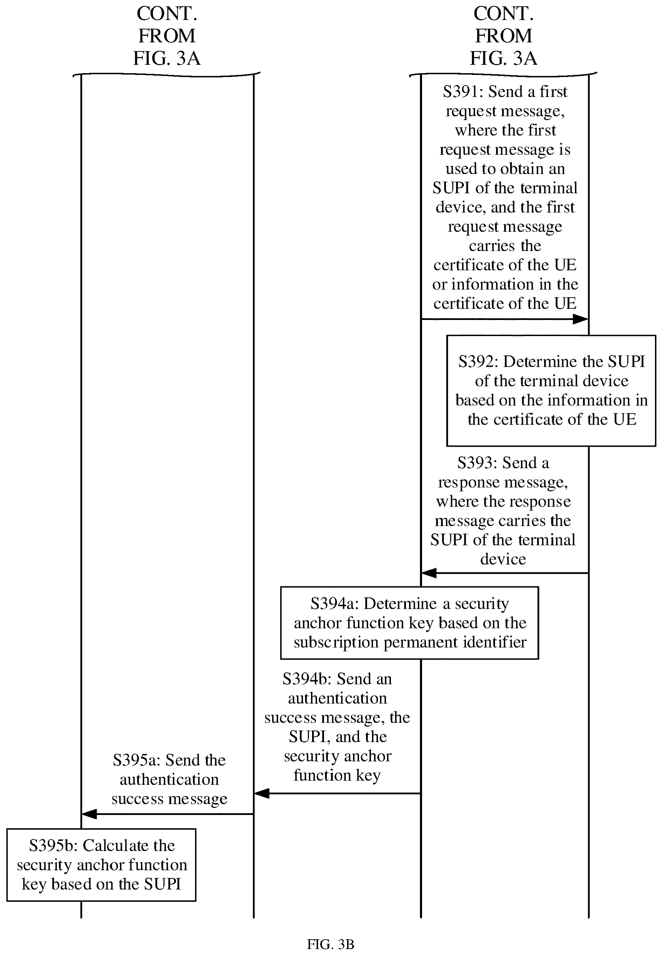

The following describes in detail the communication method provided in this application with reference to FIG. 3A and FIG. 3B. FIG. 3A and FIG. 3B are an interaction diagram of an example of a communication method according to an embodiment of this application. The method may be applied to the scenario shown in FIG. 1, and certainly may alternatively be applied to another communication scenario. This is not limited in embodiments of this application.

As shown in FIG. 3A and FIG. 3B, the method 300 shown in FIG. 3A and FIG. 3B may include S310 to S395a and S395b. The steps in the method 300 are described in detail below with reference to FIG. 3A and FIG. 3B.

S310: A terminal device sends a registration request message to a security anchor function.

In this embodiment of this application, to ensure that an identity of the UE is not disclosed, the registration request message sent by the UE to the SEAF carries an SUCI of the UE. The SUCI includes a realm of the UE, but does not include a user name of the UE.

S320: The security anchor function sends a first authentication request message to an authentication service.

In this embodiment of this application, after the SEAF receives the registration request message sent by the UE, the SEAF initiates primary authentication, that is, the SEAF sends the first authentication request message to the AUSF. The first authentication request message is used to request to invoke an authentication service provided by the AUSF, and the primary authentication is used to implement two-way authentication between a terminal device side and a network side and generate a key.

For example, the first authentication request message may be a nausf_UE authentication_authenticate request message.

It should be understood that the first authentication request message carries a serving network identifier SNN and the SUCI of the terminal device.

It should be noted that the serving network identifier is an identifier of a serving network of the UE, and is used to identify the serving network of the UE.

S330: The authentication service sends a second request message to unified data management, where the second request message carries a subscription concealed identifier.

In this embodiment of this application, the second request message is for requesting to invoke an authentication service (or an authentication vector service, or is for requesting an authentication vector) provided by the UDM.

For example, the second request message may be a nudm_UE authentication_get request message.

It should be understood that the second request message carries the serving network identifier SNN and the SUCI of the terminal device.

S340: The unified data management determines an authentication manner of the terminal device based on the second request message.

In this embodiment of this application, when receiving the second request message sent by the AUSF, the UDM determines the authentication manner of the UE based on the second request message. For example, the authentication manner is EAP-TLS.

It should be understood that, when the SUCI of the UE carried in the second request message received by the UDM does not include the user name of the UE but includes only the realm of the UE, the UDM cannot determine the SUPI of the UE based on the SUCI of the UE, and cannot determine subscription information of the UE based on the SUPI of the UE. Therefore, the UDM can determine only the authentication manner of the UE based on the second request message.

S350: The unified data management sends a first authentication response message to the authentication server function, where the first authentication response message includes the authentication manner of the terminal device.

In this embodiment of this application, the UDM sends a first authentication vector response message to the AUSF, where the first authentication vector response message carries the authentication manner of the UE. In other words, the UDM sends the authentication manner of the terminal device to the AUSF through the first authentication response message.

For example, the first authentication response message may be a nudm_UE authentication_get response message.

S360: The terminal device performs authentication on the AUSF, and establishes a TLS channel.

In this embodiment of this application, when the terminal device performs identity authentication in the EAP-TLS authentication manner, the EAP-TLS authentication manner is a manner in which a client (UE) and a server (AUSF) perform mutual verification on a digital certificate. Therefore, the AUSF first provides a certificate for the UE. That verification performed by the UE on the certificate of the AUSF succeeds indicates that authentication performed by the terminal device on a network succeeds, and indicates that the TLS secure channel is established. After the TLS channel in a first phase is established, in a second phase, the AUSF performs authentication on a certificate of the UE.

S370: The terminal device sends an authentication response message to the security anchor function, where the authentication response message carries the certificate of the terminal device.

In this embodiment of this application, after authentication performed by the UE on the AUSF succeeds, the UE needs to send the certificate of the UE to the AUSF for authentication. For example, the UE may send the certificate of the UE to the SEAF through the authentication response message.

It should be understood that the certificate of the UE includes information that can identify the UE. For example, the information in the certificate of the UE may include a name, a serial number, a subject identifier (subject ID), a subject name (subject name), a subject alternative name (subject alternative name), or the like. Certainly, the information in the certificate of the terminal device may further include other information that can identify the terminal device. The information included in the certificate is not specifically limited in this embodiment of this application.

S380: The security anchor function sends a second authentication request message to the authentication server function, where the second authentication request message carries the certificate of the UE.

When the SEAF receives the certificate of the UE sent by the UE, the SEAF sends the second authentication request message to the AUSF, where the second authentication request message carries the certificate of the UE.

For example, the second authentication request message may be a nausf_UE authentication_authenticate request message.

S390: The AUSF performs authentication on the UE based on the certificate of the terminal device.

In this embodiment of this application, when receiving the certificate of the UE, the AUSF performs authentication on validity of the certificate of the UE.

S391: The authentication server function sends first request information to the unified data management function, where the first request information is used to obtain the SUPI of the terminal device, and the first request message carries the certificate of the UE or the information in the certificate of the UE.

In this embodiment of this application, when the UE requests identity authentication, the SUCI carried by the UE does not include the user name but includes only the realm. Therefore, the AUSF does not know which terminal device initiates an authentication request. In this embodiment of this application, the AUSF may send the first request message to the UDM to obtain a subscription permanent identifier of the terminal device.

In this embodiment of this application, the first request message may carry the certificate of the terminal device, or the first request message may carry the information in the certificate of the terminal device.

For example, the first request message may be a nudm_UE authentication_get request message.

Optionally, in a possible implementation, to improve authentication efficiency, after receiving the certificate of the terminal device, the AUSF sends the first request message to the UDM, and then the AUSF performs authentication on the certificate of the UE.

Optionally, in another possible implementation, after the AUSF receives the certificate of the terminal device, the AUSF first performs authentication on the certificate of the UE, and sends the first request message to the UDM after the certificate is authenticated to be valid.

Certainly, after receiving the certificate of the UE, the AUSF may send the first request message to the UDM at any moment. An occasion on which the AUSF sends the first request message is not specifically limited in embodiments of this application.

S392: The unified data management function determines the SUPI of the terminal device based on the information in the certificate of the terminal device.

In embodiments of this application, after the UDM receives the first request information sent by the AUSF, the UDM determines the SUPI of the terminal device based on the information that is in the certificate of the UE and that is carried in the first request information.

In a possible implementation, the information in the certificate corresponding to the SUPI is preconfigured in the UDM. Therefore, the UDM may find, based on the information in the certificate of the UE carried in the request, the SUPI corresponding to the information.

For example, when the information in the certificate of the terminal device is the subject ID, the UDM preconfigures a correspondence between the subject ID and the SUPI, and the first request message sent by the AUSF carries the subject ID, the UDM may find the corresponding SUPI based on the subject ID.

For another example, when the information in the certificate of the terminal device may be the serial number of the terminal device, the UDM preconfigures a correspondence between the serial number of the terminal device and the SUPI, and the first request message sent by the AUSF carries the serial number of the terminal device, the UDM may find the corresponding SUPI based on the serial number of the terminal device.

In another possible implementation, the UDM may obtain, in another manner, the information in the certificate corresponding to the SUPI. For example, another terminal device or network device may send the information in the certificate corresponding to the SUPI to the UDM. Therefore, the UDM may find, based on the information in the certificate of the UE carried in the request, the SUPI corresponding to the ID.

It should be noted that the UDM may alternatively determine, in another manner, the information in the certificate corresponding to the SUPI. A manner in which the UDM determines the information in the certificate corresponding to the SUPI is not specifically limited in embodiments of this application.

Optionally, in a possible implementation, the UDM may further determine the subscription information of the UE based on the found SUPI.

It should be understood that the subscription information of the UE indicates service items that the UE subscribes to. For example, the subscription information may be an architecture for authentication and key management for applications (architecture for authentication and key management for applications, AKMA). In other words, it indicates that the UE is allowed to use an AKMA service.

S393: The unified data management sends a response message to the authentication server function, where the response message carries the SUPI of the terminal device.

In embodiments of this application, after the UDM finds the corresponding SUPI based on the information in the certificate of the UE, the UDM may send the SUPI of the terminal device to the AUSF through the response message. In other words, the response message may carry the SUPI of the terminal device.

Optionally, when the UDM determines the subscription information of the UE based on the SUPI of the UE, the UDM may further send the subscription information of the terminal device to the AUSF through the response message. In other words, the response message may further carry the subscription information of the UE. For example, the subscription information includes an AKMA ID.

For example, the response message may be a nudm_UE authentication_get response message.

S394a: The authentication server function determines a security anchor function key based on the subscription permanent identifier.

S394b: The authentication server function sends an authentication success message, the SUPI, and the security anchor function key to the SEAF.

In step S394a, the AUSF may calculate the security anchor function key Kseaf based on the SUPI of the terminal device sent by the UDM.

In step S394b, after authentication between the network and the terminal device succeeds, the AUSF sends the security anchor function key, the SUPI, and the authentication success message to the SAFE.

It should be understood that the authentication success message indicates that identity authentication between the AUSF and the UE succeeds.

For example, the AUSF may send the authentication success (EAP success) message, the security anchor function key, and the SUPI to the SEAF through a nausf_UE authentication_authenticate response message.

S395a: The security anchor function sends the authentication success message to the terminal device.

S395b: The terminal device generates the security anchor function key based on the SUPI.

In step S395a, the SEAF transmits the received authentication success message to the UE.

In step S395b, after the UE receives the authentication success message, the UE generates the security anchor function key Kseaf based on the SUPI. The security anchor function key is used to ensure security of subsequent communication between the UE and the network.

In embodiments of this application, to ensure that an identity of the user terminal is not disclosed, when the terminal device sends a registration request message to the authentication server function, the registration request message carries the anonymous subscription concealed identifier. In other words, the subscription concealed identifier of the terminal device includes a realm of the terminal device, but does not include a user name of the terminal device. To complete security authentication between the terminal device and the authentication server function, the AUSF may send the first request message to the UDM, where the first request message carries the certificate of the terminal device or an ID in the certificate, and the first request message is used to obtain the subscription permanent identifier of the terminal device. Then, the authentication server function receives the response message sent by the UDM, where the response message includes the subscription permanent identifier of the terminal device, and the subscription permanent identifier corresponds to the information in the certificate of the terminal device. Therefore, the authentication server function may obtain the subscription permanent identifier of the UE based on the response message. In other words, the AUSF may know which terminal device initiates an authentication request. In this way, the AUSF may determine the security anchor function key based on the subscription permanent identifier, and finally identity authentication between the terminal device and the authentication server function is completed. In other words, security of the terminal device is ensured in an authentication process, and security of communication between the terminal device and the network side is also ensured.

However, in the foregoing method, the AUSF can complete the authentication procedure only after obtaining the SUPI from the UDM. Therefore, authentication efficiency is affected to some extent.

In view of this, an embodiment of this application further provides another example of a communication method. In the method, to ensure that an identity of a user terminal is not disclosed, an authentication request message of the UE received by an AUSF includes a subscription concealed identifier of the terminal device, that is, the subscription concealed identifier of the terminal device includes a realm of the terminal device, but does not include a user name of the terminal device. To complete security authentication between the terminal device and the authentication server function, after the AUSF receives a certificate of the terminal device sent by the terminal device, the certificate of the terminal device carries information in the certificate of the terminal device, and the AUSF may determine a subscription permanent identifier of the terminal device based on the information in the certificate of the terminal device. In other words, the authentication server function may know which terminal device initiates an authentication request. In this way, a security anchor function key may be determined based on the subscription permanent identifier, and finally identity authentication between the terminal device and the authentication server function is completed. Therefore, the AUSF can complete authentication between the UE and a network side without obtaining an SUPI from UDM. According to this method, efficiency of authentication between the UE and the network is improved when a problem of obtaining a user identifier is resolved.

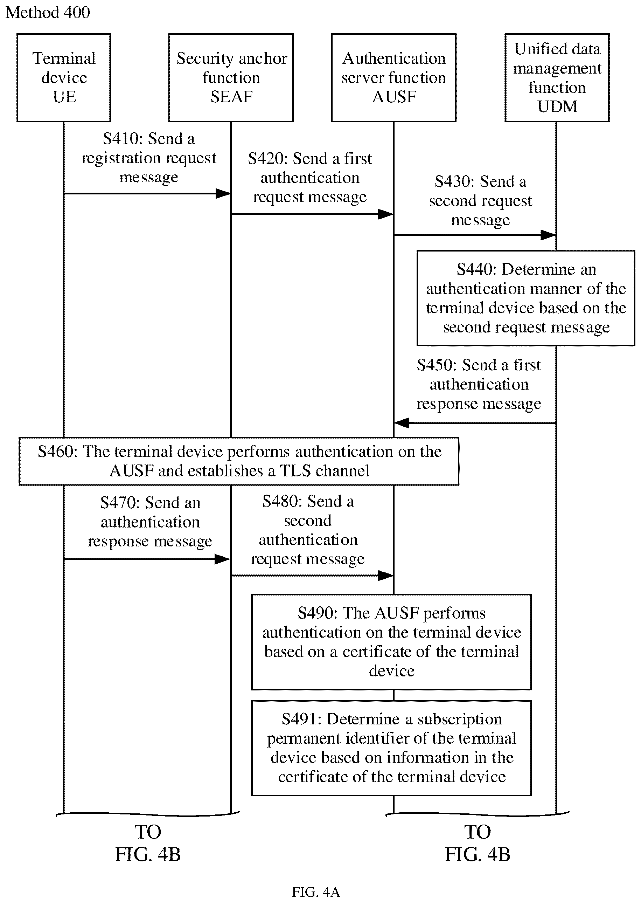

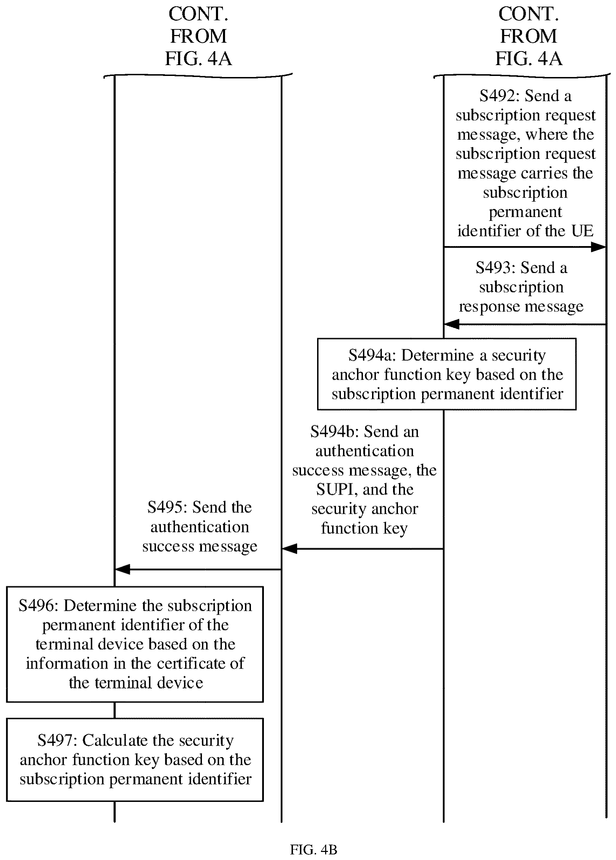

The following specifically describes, by using FIG. 4A and FIG. 4B as an example, still another example of a communication method according to an embodiment of this application. FIG. 4A and FIG. 4B are an interaction diagram of still another example of a communication method according to an embodiment of this application. As shown in FIG. 4A and FIG. 4B, the method 400 includes S410 to S497.

S410: A terminal device sends a registration request message to a security anchor function.

S420: The security anchor function sends a first authentication request message to an authentication service.

S430: The authentication service sends a second request message to unified data management, where the second request message carries a subscription concealed identifier.

S440: The unified data management determines an authentication manner of the terminal device based on the second request message.

S450: The unified data management sends a first authentication response message to the authentication server function, where the first authentication response message includes the authentication manner of the terminal device.

S460: The terminal device performs authentication on the authentication server function, and establishes a TLS channel.

S470: The terminal device sends an authentication response message to the security anchor function, where the authentication response message carries a certificate of the terminal device.

S480: The security anchor function sends a second authentication request message to the authentication server function, where the second authentication request message carries the certificate of the UE.

For descriptions of step S410 to step S480, refer to step S310 to step S380. Details are not described herein again.

S490: The AUSF performs authentication on the terminal device based on the certificate of the terminal device.

The authentication server function receives the certificate of the terminal device sent by the terminal device, where the certificate of the terminal device carries information in the certificate of the terminal device.

In step S490, the AUSF receives the certificate sent by the terminal device, and verifies whether the certificate of the terminal device is valid.

S491: The authentication server function determines a subscription permanent identifier of the terminal device based on the information in the certificate of the terminal device.

In this embodiment of this application, to identify the terminal device, the AUSF may determine the subscription permanent identifier of the terminal device based on the information in the certificate of the terminal device.

In a possible implementation, the AUSF may directly use the information in the certificate of the terminal device as the SUPI of the UE.

In another possible implementation, the AUSF may determine the subscription permanent identifier of the terminal device based on the information in the certificate of the terminal device and a public land mobile network (public land mobile network, PLMN) ID of the terminal device.

S492: The authentication server function sends subscription request information to the unified data management, where the subscription request information carries the subscription permanent identifier of the terminal device.

Optionally, in embodiments of this application, when the information in the certificate of the UE is used as the SUPI, although the SUPI does not need to be obtained from the UDM, the AUSF further needs to obtain subscription data of the UE. Therefore, in step S492, the AUSF may send the subscription request information to the UDM, where the subscription request message is used to request the subscription data of the UE.

For example, the subscription request message may be sent through a nudm_UE authentication_result confirmation message. To be specific, an indication may be additionally added to the nudm_UE authentication_result confirmation message, and the indication is used to request a subscription service. For example, the subscription service may be an AKMA service indication.

It should be understood that the nudm_UE authentication_result confirmation message carries the SUPI.

S493: The unified data management sends a subscription response message to the authentication server function.

Optionally, after the UDM receives the subscription request message sent by the AUSF, the UDM determines the subscription data of the UE based on the SUPI carried in the subscription request message, and sends the subscription data to the AUSF through the subscription response message.

It should be noted that, because the SUPI of the terminal device is determined based on the information in the certificate of the terminal device, and the subscription request message carries the SUPI of the terminal device, it may also be understood that after the UDM receives the subscription request message sent by the AUSF, the UDM determines subscription information of the terminal device based on the information in the certificate of the terminal device.

For example, the subscription information may include AKMA service indication information. Certainly, the subscription information may alternatively be other information. This is not limited in embodiments of this application.

It should be understood that when the subscription information is the AKMA service indication information, the authentication server function provides an AKMA service for the terminal device.

For example, the subscription response message may be a nudm_UE authentication_get response message.

It should be noted that step S492 and step S493 are optional steps. Step S492 and step S493 may be performed after step S491, or may be performed after the terminal device and the AUSF complete an entire authentication process. Whether step S492 and step S493 are performed and an execution time sequence are not specifically limited in embodiments of this application.

S494a: The authentication server function determines a security anchor function key based on the subscription permanent identifier.

S494b: The authentication server function sends an authentication success message, the SUPI, and the security anchor function key to the security anchor function.

For descriptions of step S494a and step S494b, refer to S394a and S394b. Details are not described herein again.

S495: The SEAF sends the authentication success message to the UE.

In step S494, the SEAF transmits the AUSF authentication success message to the UE.

S496: The UE determines the subscription permanent identifier of the terminal device based on the information in the certificate of the terminal device.

In embodiments of this application, the UE may determine the subscription permanent identifier of the terminal device based on the information in the certificate of the terminal device.

In a possible implementation, the UE may directly use the information in the certificate of the terminal device as the SUPI of the UE. In other words, the terminal device may directly use any information in a name, a sequence number, a subject identifier, a subject name, or a subject alternative name as the SUPI of the UE.

In another possible implementation, the UE may determine the subscription permanent identifier of the terminal device based on the information in the certificate of the terminal device and a PLMN ID of the terminal device.

For example, when the information in the certificate of the terminal device is the subject identifier, the UE may determine the subscription permanent identifier of the terminal device based on the subject identifier of the terminal device and the PLMN ID of the terminal device.

S497: The UE calculates the security anchor function key based on the subscription permanent identifier.

Finally, the UE calculates the security anchor function key based on the determined subscription permanent identifier, where the security anchor function key can ensure security of communication between the UE and a network.

In another communication method provided in this application, to ensure that an identity of the user terminal is not disclosed, an authentication request message of the UE received by an AUSF includes a subscription concealed identifier of the terminal device, that is, the subscription concealed identifier of the terminal device includes a realm of the terminal device, but does not include a user name of the terminal device. To complete security authentication between the terminal device and the authentication server function, after the AUSF receives a certificate of the terminal device sent by the terminal device, the certificate of the terminal device carries information in the certificate of the terminal device, and the AUSF may determine a subscription permanent identifier of the terminal device based on the information in the certificate of the terminal device. In other words, the authentication server function may know which terminal device initiates an authentication request. In this way, a security anchor function key may be determined based on the subscription permanent identifier, and finally identity authentication between the terminal device and the authentication server function is completed. Therefore, the AUSF can complete authentication between the UE and a network side without obtaining an SUPI from UDM. According to this method, efficiency of authentication between the UE and the network is improved when a problem of obtaining a user identifier is resolved.

It should be understood that division into manners, cases, categories, and embodiments in embodiments of this application is merely for ease of description, and should not constitute a special limitation. Features in various manners, categories, cases, and embodiments may be combined without contradiction.

It should be further understood that, the foregoing descriptions are merely intended to help a person skilled in the art better understand embodiments of this application, instead of limiting the scope of embodiments of this application. It is apparent that a person skilled in the art may make various equivalent modifications or changes based on the examples provided above. For example, some steps in the method 300 and the method 400 may be unnecessary, some steps may be newly added, or the like. Alternatively, any two or more of the foregoing embodiments are combined. A modified, changed, or combined solution also falls within the scope of embodiments of this application.

It should be further understood that the foregoing descriptions of embodiments of this application emphasize differences between embodiments. For same or similar parts that are not mentioned, refer to embodiments. For brevity, details are not described herein again.

It should be further understood that a value of a sequence number of each of the foregoing process does not mean an order of an execution sequence. The execution sequence of each process should be determined based on a function and internal logic of each process, and should not be construed as any limitation on the implementation processes of embodiments of this application.

It should be further understood that, in embodiments of this application, "preconfiguring" and "predefining" may be implemented by prestoring corresponding code or a corresponding table on a device (for example, including the terminal device and the network device), or in another manner that may indicate related information. A specific implementation thereof is not limited in this application.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The foregoing describes in detail examples of the communication methods provided in this application. It may be understood that, to implement the foregoing functions, the authentication server function, the terminal device, and the unified data management include corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

The following describes a communication apparatus according to this application.

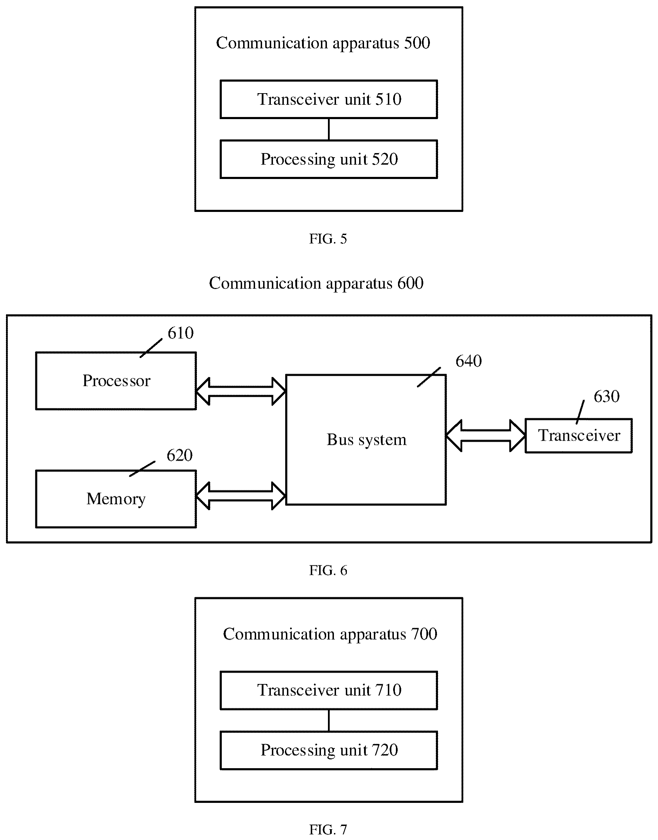

For example, FIG. 5 is a block diagram of a communication apparatus 500 according to an embodiment of this application. The communication apparatus 500 may correspond to the authentication server function described in embodiments of the method 300 and the method 400, or may be used in a chip or a component of the authentication server function. In addition, modules or units in the communication apparatus 500 are separately configured to perform actions or processing processes performed by the authentication server function described in embodiments of the method 300 and the method 400.

As shown in FIG. 5, the communication apparatus 500 includes a transceiver unit 510 and a processing unit 520. The transceiver unit 510 is configured to specifically send or receive a signal under driving of the processing unit 520.

In some embodiments,
the transceiver unit 510 is configured to receive an authentication request message of a terminal device, where the authentication request message includes a subscription concealed identifier of the terminal device.

The transceiver unit 510 is configured to send a first request message to a unified data management function based on the authentication request message, where the first request message is used to obtain a subscription permanent identifier of the terminal device, and the first request message carries a certificate of the terminal device or carries information in the certificate of the terminal device.

The transceiver unit 510 is further configured to receive response message sent by the unified data management function, where the response message includes the subscription permanent identifier, and the subscription permanent identifier corresponds to the information in the certificate of the terminal device.

The processing unit 520 is configured to determine a security anchor function key based on the subscription permanent identifier.

In some other embodiments:
the transceiver unit 510 is configured to receive an authentication request message of a terminal device, where the authentication request message includes a subscription concealed identifier of the terminal device.

The transceiver unit 510 is configured to receive a certificate of the terminal device sent by the terminal device, where the certificate of the terminal device carries information in the certificate of the terminal device.

The processing unit 520 is configured to determine a subscription permanent identifier of the terminal device based on the information in the certificate of the terminal device.

The processing unit 520 is configured to determine a security anchor function key based on the subscription permanent identifier.

It should be understood that, for a specific process in which the units in the communication apparatus 500 perform the foregoing corresponding steps, refer to the foregoing descriptions related to the authentication server function with reference to the method 300 and the method 400 and the related embodiments in FIG. 3A and FIG. 3B and FIG. 4A and FIG. 4B. For example, the transceiver unit 510 may perform receiving and sending steps in the foregoing method embodiments, and the processing unit 520 may perform steps other than receiving and sending. Various specific processing is described in the method embodiments. For brevity, details are not described herein again.

FIG. 6 is a block diagram of another communication apparatus 600 according to an embodiment of this application. As shown in FIG. 6, the communication apparatus 600 may include a processor 610, a memory 620, a transceiver 630, and a bus system 640. All components of the communication apparatus 600 are coupled together through the bus system 640. In addition to a data bus, the bus system 640 may include a power bus, a control bus, a status signal bus, and the like. However, for clear description, various buses are marked as the bus system 640 in FIG. 6. For ease of illustration, FIG. 6 merely shows an example of the communication apparatus 600.

The communication apparatus 500 shown in FIG. 5 or the communication apparatus 600 shown in FIG. 6 can implement the steps performed by the authentication server function in embodiments of the method 300 and the method 400. For similar descriptions, refer to the descriptions in the foregoing corresponding methods. To avoid repetition, details are not described herein again.

It should be further understood that the communication apparatus 500 shown in FIG. 5 or the communication apparatus 600 shown in FIG. 6 may be an authentication server function.

FIG. 7 is a block diagram of a communication apparatus 700 according to an embodiment of this application. The communication apparatus 700 may correspond to the unified data management function described in the method 300 and the method 400, or may be a chip or a component used in the unified data management function. In addition, modules or units in the communication apparatus 700 are separately configured to perform actions or processing processes performed by the unified data management function in the method 300 and the method 400.

As shown in FIG. 7, the communication apparatus 700 may include a transceiver unit 710 and a processing unit 720. The transceiver unit 710 is configured to specifically send or receive a signal under driving of the processing unit 720.

In some embodiments,
the transceiver unit 710 is configured to receive a first request message sent by an authentication server function, where the first request message is used to obtain a subscription permanent identifier of a terminal device, and the first request message carries a certificate of the terminal device or carries information in the certificate of the terminal device.

The processing unit 720 is configured to determine the subscription permanent identifier of the terminal device based on the information in the certificate of the terminal device.

The transceiver unit 710 is further configured to send a response message to the authentication server function, where the response message includes the subscription permanent identifier.

In some other embodiments:
the transceiver unit 710 is configured to receive a subscription request message sent by an authentication server function, where the subscription request message carries a subscription permanent identifier of a terminal device, and the subscription permanent identifier is determined based on information in a certificate of the terminal device.

The processing unit 720 is configured to determine subscription information of the terminal device based on the subscription permanent identifier.

The transceiver unit 710 is configured to send a subscription response message to the authentication server function, where the subscription response message includes the subscription information of the terminal device.

It should be understood that, for a specific process in which the units in the communication apparatus 700 perform the foregoing corresponding steps, refer to the foregoing descriptions related to the unified data management function with reference to the related embodiments in the method 300 and the method 400. For example, the transceiver unit 710 may perform receiving and sending steps in the foregoing method embodiments, and the processing unit 720 may perform steps other than receiving and sending. Various specific processing is described in the method embodiments. For brevity, details are not described herein again.

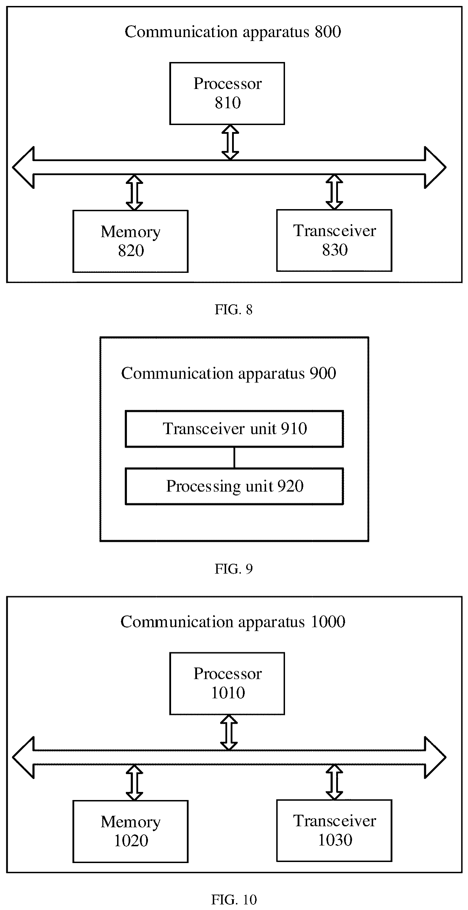

It should be understood that, the transceiver unit 710 may be a transceiver, an input/output interface, or an interface circuit. A storage unit may be a memory. The processing unit 720 may be implemented by a processor. FIG. 8 is a block diagram of another communication apparatus 800 according to an embodiment of this application. As shown in FIG. 8, the communication apparatus 800 may include a processor 810, a memory 820, and a transceiver 830.

The communication apparatus 700 shown in FIG. 7 or the communication apparatus 800 shown in FIG. 8 can implement the steps performed by the unified data management function in embodiments of the method 300 and the method 400. For similar descriptions, refer to the descriptions in the foregoing corresponding methods. To avoid repetition, details are not described herein again.

It should be further understood that the communication apparatus 700 shown in FIG. 7 or the communication apparatus 800 shown in FIG. 8 may be a unified data management function.

FIG. 9 is a block diagram of a communication apparatus 900 according to an embodiment of this application. The communication apparatus 900 may correspond to the terminal device described in the method 300 and the method 400, or may be a chip or a component used in the terminal device. In addition, modules or units in the communication apparatus 900 are separately configured to perform actions or processing processes performed by the terminal device in the method 300 and the method 400.

As shown in FIG. 9, the communication apparatus 900 may include a transceiver unit 910 and a processing unit 920. The transceiver unit 910 is configured to specifically send or receive a signal under driving of the processing unit 920.

In some embodiments,
the transceiver unit 910 is configured to send a registration request message to an access and mobility management function, where the registration request message includes a subscription concealed identifier of a terminal device.

The transceiver unit 910 is configured to receive an authentication success message of the access and mobility management function.

The processing unit 920 is configured to determine a subscription permanent identifier of the terminal device based on information in a certificate of the terminal device.

The processing unit 920 is configured to calculate a security anchor function key based on the subscription permanent identifier.

It should be understood that, for a specific process in which the units in the communication apparatus 900 perform the foregoing corresponding steps, refer to the foregoing descriptions related to the terminal device with reference to the related embodiments in the method 300 and the method 400. For example, the transceiver unit 910 may perform receiving and sending steps in the foregoing method embodiments, and the processing unit 920 may perform steps other than receiving and sending. Various specific processing methods are described in the method embodiments. For brevity, details are not described herein again.

Optionally, the transceiver unit 910 may include a receiving unit (module) and a sending unit (module), configured to perform the steps of receiving information and sending information by the terminal device in embodiments of the method 300 and the method 400.

It should be understood that, the transceiver unit 910 may be a transceiver, an input/output interface, or an interface circuit. A storage unit may be a memory. The processing unit 920 may be implemented by a processor. FIG. 10 is a block diagram of another communication apparatus 1000 according to an embodiment of this application. As shown in FIG. 10, the communication apparatus 1000 may include a processor 1010, a memory 1020, and a transceiver 1030.

The communication apparatus 900 shown in FIG. 9 or the communication apparatus 1000 shown in FIG. 10 can implement the steps performed by the terminal device in embodiments of the method 300 and the method 400. For similar descriptions, refer to the descriptions in the foregoing corresponding methods. To avoid repetition, details are not described herein again.

It should be further understood that the communication apparatus 900 shown in FIG. 9 or the communication apparatus 1000 shown in FIG. 10 may be a terminal device.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units are implemented in a form of hardware.

In an example, a unit in any one of the foregoing apparatuses may be one or more integrated circuits configured to implement the foregoing methods, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the unit in the apparatus may be implemented by scheduling a program by a processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

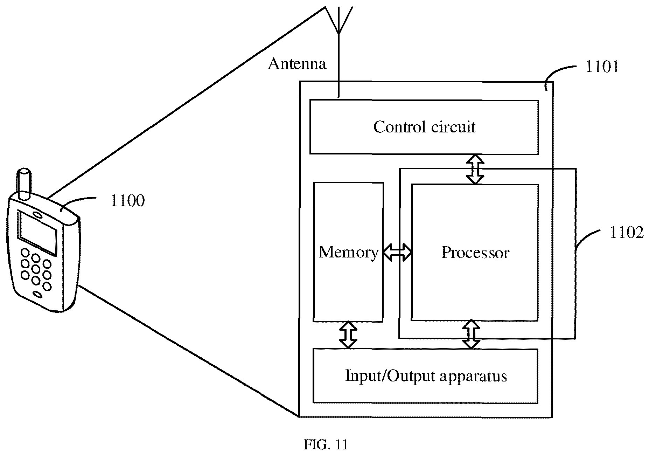

FIG. 11 is a diagram of a structure of a terminal device 1100 according to this application. The communication apparatus 900 or the communication apparatus 1000 may be configured in the terminal device 1100. Alternatively, the communication apparatus 900 or the communication apparatus 1000 may be the terminal device 1100. In other words, the terminal device 1100 may perform actions performed by the terminal device in the method 300 and the method 400. Optionally, for ease of description, FIG. 11 shows only main components of the terminal device. As shown in FIG. 11, the terminal device 1100 includes a processor, a memory, a control circuit, an antenna, and an input/output apparatus.

The processor is mainly configured to: process a communication protocol and communication data, control the entire terminal device, execute a software program, and process data of the software program.

After the terminal device is powered on, the processor may read the software program in a storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 11 shows only one memory and one processor. In an actual terminal device, there may be a plurality of processors and memories. The memory may also be referred to as a storage medium, a storage device, or the like. This is not limited in embodiments of this application.

The processor in FIG. 11 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have a transceiver function may be considered as a transceiver unit 1101 of the terminal device 1100, and the processor that has a processing function may be considered as a processing unit 1102 of the terminal device 1100. As shown in FIG. 11, the terminal device 1100 includes the transceiver unit 1101 and the processing unit 1102. The transceiver unit may also be referred to as a transceiver, a transceiver machine, a transceiver apparatus, or the like. Optionally, a component configured to implement a receiving function in the transceiver unit 1101 may be considered as a receiving unit, and a component configured to implement a sending function in the transceiver unit 1101 may be considered as a sending unit. In other words, the transceiver unit 1101 includes a receiving unit and a sending unit. For example, the receiving unit may also be referred to as a receiver, a receive machine, or a receiving circuit, and the sending unit may also be referred to as a transmitter, a transmit machine, or a transmitting circuit.

An embodiment of this application further provides a communication system. The system includes the authentication server function and the unified data management function that are provided in the foregoing method embodiments.

An embodiment of this application further provides a communication system. The system includes the authentication server function, the unified data management function, and the terminal device that are provided in the foregoing method embodiments.

According to the methods provided in embodiments of this application, this application further provides a computer-readable storage medium, configured to store computer program code. The computer program includes instructions used to perform any communication method provided in the foregoing embodiments of this application. The readable medium may be a read-only memory (read-only memory, ROM) or a random access memory (random access memory, RAM). This is not limited in embodiments of this application.

According to the methods provided in embodiments of this application, this application further provides a computer program product. The computer program product includes instructions. When the instructions are executed, the authentication server function, the unified data management, and the terminal device are enabled to perform corresponding operations in the foregoing methods.

According to the methods provided in embodiments of this application, this application further provides a chip located in a communication apparatus. The chip includes a processing unit and a communication unit. The processing unit may be, for example, a processor, and the communication unit may be, for example, an input/output interface, a pin, a circuit, or the like. The processing unit may execute computer instructions, so that the communication apparatus is enabled to perform any communication method provided in the foregoing embodiments of this application.

All or some of the methods in embodiments of this application may be implemented by software, hardware, firmware, or any combination thereof. When software is used to implement the foregoing embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a readable storage medium, and includes several instructions for enabling a computer device (which may be a personal computer, a server, or a network device) to perform all or some of the steps of the methods described in embodiments of this application. The foregoing readable storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by an authentication server function, an authentication request message of a terminal device, wherein the authentication request message comprises a subscription concealed identifier of the terminal device;
sending, by the authentication server function, a first request message to a unified data management function based on the authentication request message, wherein the first request message is used to obtain a subscription permanent identifier of the terminal device, and the first request message carries a certificate of the terminal device or carries information in the certificate of the terminal device;
receiving, by the authentication server function, a response message sent by the unified data management function, wherein the response message comprises the subscription permanent identifier, and the subscription permanent identifier corresponds to the information in the certificate of the terminal device; and
determining, by the authentication server function, a security anchor function key based on the subscription permanent identifier.

2. The method according to claim 1, wherein before sending, by the authentication server function, the first request message to the unified data management function based on the authentication request message, the method further comprises:
sending, by the authentication server function, a second request message to the unified data management function, wherein the second request message carries the subscription concealed identifier;
receiving, by the authentication server function, indication information sent by the unified data management function, wherein the indication information indicates an authentication manner of the terminal device;
sending, by the authentication server function, the authentication manner of the terminal device to the terminal device; and
receiving, by the authentication server function, the certificate of the terminal device sent by the terminal device, wherein the certificate of the terminal device carries the information in the certificate of the terminal device.

3. The method according to claim 1 or 2, wherein the response message further comprises subscription information of the terminal device.

4. A communication method, wherein the method comprises:
receiving, by a unified data management function, a first request message sent by an authentication server function, wherein the first request message is used to obtain a subscription permanent identifier of a terminal device, and the first request message carries a certificate of the terminal device or carries information in the certificate of the terminal device;
determining, by the unified data management function, the subscription permanent identifier of the terminal device based on the information in the certificate of the terminal device; and
sending, by the unified data management function, a response message to the authentication server function, wherein the response message comprises the subscription permanent identifier.

5. The method according to claim 4, wherein before determining, by the unified data management function, the subscription permanent identifier of the terminal device based on the information in the certificate of the terminal device, the method further comprises:
preconfiguring, by the unified data management function, a correspondence between the information in the certificate of the terminal device and the subscription permanent identifier of the terminal device.

6. The method according to claim 4 or 5, wherein the method further comprises:
determining, by the unified data management function, subscription information of the terminal device based on the information in the certificate of the terminal device, wherein the response message further comprises the subscription information of the terminal device.

7. A communication method, wherein the method comprises:
receiving, by an authentication server function, an authentication request message of a terminal device, wherein the authentication request message comprises a subscription concealed identifier of the terminal device;
receiving, by the authentication server function, a certificate of the terminal device sent by the terminal device, wherein the certificate of the terminal device carries information in the certificate of the terminal device;
determining, by the authentication server function, a subscription permanent identifier of the terminal device based on the information in the certificate of the terminal device; and
determining, by the authentication server function, a security anchor function key based on the subscription permanent identifier.

8. The method according to claim 7, wherein the method further comprises:
sending, by the authentication server function, a subscription request message to a unified data management function, wherein the subscription request message carries the subscription permanent identifier; and
receiving, by the authentication server function, a subscription response message sent by the unified data management function, wherein the subscription response message carries subscription information of the terminal device.

9. The method according to claim 7 or 8, wherein determining, by the authentication server function, the subscription permanent identifier of the terminal device based on the information in the certificate of the terminal device comprises:
determining, by the authentication server function, the subscription permanent identifier of the terminal device based on the information in the certificate of the terminal device and information in a public land mobile network of the terminal device.

10. A communication method, wherein the method comprises:
sending a registration request message to an access and mobility management function, wherein the registration request message comprises a subscription concealed identifier of a terminal device;
receiving an authentication success message sent by the access and mobility management function;
determining a subscription permanent identifier of the terminal device based on information in a certificate of the terminal device; and
calculating a security anchor function key based on the subscription permanent identifier.

11. The method according to claim 10, wherein before receiving the authentication success message sent by the access and mobility management function, the method further comprises:
receiving indication information sent by an authentication server function, wherein the indication information indicates an authentication manner of the terminal device; and
sending the certificate of the terminal device to the authentication server function, wherein the certificate of the terminal device carries the information in the certificate of the terminal device.

12. The method according to claim 10 or 11, wherein determining, the subscription permanent identifier of the terminal device based on the information in the certificate of the terminal device comprises:
determining the subscription permanent identifier based on the information in the certificate of the terminal device and a public land mobile network information identifier of the terminal device.

13. A communication method, wherein the method comprises:
receiving, by a unified data management function, a subscription request message sent by an authentication server function, wherein the subscription request message carries a subscription permanent identifier of a terminal device, and the subscription permanent identifier corresponds to information in a certificate of the terminal device;
determining, by the unified data management function, subscription information of the terminal device based on the subscription permanent identifier; and
sending, by the unified data management function, a subscription response message to the authentication server function, wherein the subscription response message comprises the subscription information of the terminal device.

14. A communication apparatus, wherein the apparatus comprises:
a transceiver unit, wherein the transceiver unit is configured to: receive an authentication request message of a terminal device, wherein the authentication request message comprises a subscription concealed identifier of the terminal device;
send a first request message to a unified data management function based on the authentication request message, wherein the first request message is used to obtain a subscription permanent identifier of the terminal device, and the first request message carries a certificate of the terminal device or carries information in the certificate of the terminal device; and
receive a response message sent by the unified data management function, wherein the response message comprises the subscription permanent identifier, and the subscription permanent identifier corresponds to the information in the certificate of the terminal device; and
a processing unit, wherein the processing unit is configured to determine a security anchor function key based on the subscription permanent identifier.

15. The apparatus according to claim 14, wherein
the transceiver unit is further configured to: send a second request message to the unified data management function, wherein the second request message carries the subscription concealed identifier;
receive indication information sent by the unified data management function, wherein the indication information indicates an authentication manner of the terminal device;
send the authentication manner of the terminal device to the terminal device; and
receive the certificate of the terminal device sent by the terminal device, wherein the certificate of the terminal device carries the information in the certificate of the terminal device.

16. The apparatus according to claim 14 or 15, wherein the response message further comprises subscription information of the terminal device.

17. A communication apparatus, wherein the apparatus comprises:
a transceiver unit, wherein the transceiver unit is configured to receive a first request message sent by an authentication server function, wherein the first request message is used to obtain a subscription permanent identifier of a terminal device, and the first request message carries a certificate of the terminal device or carries information in the certificate of the terminal device; and
a processing unit, wherein the processing unit is configured to determine the subscription permanent identifier of the terminal device based on the information in the certificate of the terminal device, wherein
the transceiver unit is further configured to send a response message to the authentication server function, wherein the response message comprises the subscription permanent identifier.

18. The apparatus according to claim 17, wherein
the processing unit is further configured to preconfigure a correspondence between the information in the certificate of the terminal device and the subscription permanent identifier of the terminal device.

19. The apparatus according to claim 17 or 18, wherein
the processing unit is further configured to determine subscription information of the terminal device based on the information in the certificate of the terminal device, wherein the response message further comprises the subscription information of the terminal device.

20. A communication apparatus, wherein the apparatus comprises:
a transceiver unit, wherein the transceiver unit is configured to: receive an authentication request message of a terminal device, wherein the authentication request message comprises a subscription concealed identifier of the terminal device; and
receive a certificate of the terminal device sent by the terminal device, wherein the certificate of the terminal device carries information in the certificate of the terminal device; and
a processing unit, wherein the processing unit is configured to: determine a subscription permanent identifier of the terminal device based on the information in the certificate of the terminal device; and
determine a security anchor function key based on the subscription permanent identifier.

21. The apparatus according to claim 20, wherein
the transceiver unit is further configured to: send a subscription request message to a unified data management function, wherein the subscription request message carries the subscription permanent identifier; and
receive a subscription response message sent by the unified data management function, wherein the subscription response message carries subscription information of the terminal device.

22. The apparatus according to claim 20 or 21, wherein
the processing unit is further configured to determine the subscription permanent identifier of the terminal device based on the information in the certificate of the terminal device and information in a public land mobile network of the terminal device.

23. A communication apparatus, wherein the apparatus comprises:
a transceiver unit, wherein the transceiver unit is configured to: send a registration request message to an access and mobility management function, wherein the registration request message comprises a subscription concealed identifier of a terminal device; and
receive an authentication success message sent by the access and mobility management function; and
a processing unit, wherein the processing unit is configured to: determine a subscription permanent identifier of the terminal device based on information in a certificate of the terminal device; and
calculate a security anchor function key based on the subscription permanent identifier.

24. The apparatus according to claim 23, wherein
the transceiver unit is further configured to: receive indication information sent by an authentication server function, wherein the indication information indicates an authentication manner of the terminal device; and
send the certificate of the terminal device to the authentication server function, wherein the certificate of the terminal device carries the information in the certificate of the terminal device.

25. The apparatus according to claim 23 or 24, wherein
the processing unit is further configured to determine the subscription permanent identifier based on the information in the certificate of the terminal device and a public land mobile network identifier of the terminal device.

26. A communication apparatus, wherein the apparatus comprises:
a transceiver unit, wherein the transceiver unit is configured to receive a subscription request message sent by an authentication server function, wherein the subscription request message carries a subscription permanent identifier of a terminal device, and the subscription permanent identifier is determined based on information in a certificate of the terminal device; and
a processing unit, wherein the processing unit is configured to determine subscription information of the terminal device based on the subscription permanent identifier, wherein
the transceiver unit is further configured to send a subscription response message to the authentication server function, wherein the subscription response message comprises the subscription information of the terminal device.

27. A communication apparatus, wherein the communication apparatus comprises a processor and a memory, wherein
the processor is coupled to the memory, the memory stores program instructions, and when the program instructions are executed by the processor, the communication apparatus is enabled to perform the method according to any one of claims 1 to 3, or perform the method according to any one of claims 4 to 6, or perform the method according to any one of claims 7 to 9, or perform the method according to any one of claims 10 to 12, or perform the method according to claim 13.

28. A computer-readable storage medium, wherein the computer-readable storage medium stores a computer program or instructions, and when a computer reads and executes the computer program or the instructions, the computer is enabled to perform the method according to any one of claims 1 to 3, or perform the method according to any one of claims 4 to 6, or perform the method according to any one of claims 7 to 9, or perform the method according to any one of claims 10 to 12, or perform the method according to claim 13.

29. A computer program product, wherein the computer program product comprises instructions, and when the instructions are run on a computer, the computer is enabled to perform the method according to any one of claims 1 to 3, or perform the method according to any one of claims 4 to 6, or perform the method according to any one of claims 7 to 9, or perform the method according to any one of claims 10 to 12, or perform the method according to claim 13.

30. A chip, comprising: a processor, configured to perform the method according to any one of claims 1 to 3, or perform the method according to any one of claims 4 to 6, or perform the method according to any one of claims 7 to 9, or perform the method according to any one of claims 10 to 12, or perform the method according to claim 13.

31. A communication system, wherein the system comprises an authentication server function and/or a unified data management function, wherein
the authentication server function is configured to perform the method according to any one of claims 1 to 3, and the unified data management function is configured to perform the method according to any one of claims 4 to 6.

32. A communication system, wherein the system comprises a terminal device, an authentication server function, and/or a unified data management function, wherein
the authentication server function is configured to perform the method according to any one of claims 7 to 9, the terminal device is configured to perform the method according to any one of claims 10 to 12, and the unified data management function is configured to perform the method according to claim 13.
